# EUROPÄISCHE PATENTSCHRIFT

(11) **EP 3 083 316 B1**
(45) Veröffentlichungstag und Bekanntmachung des Hinweises auf die Patenterteilung: **28.02.2018**
(21) Anmeldenummer: 14812140.3
(22) Anmeldetag: 17.11.2014
(51) Int. Cl.: B60K 37/06, F16H 59/02

(54) **VERFAHREN UND VORRICHTUNG ZUM VERSETZEN EINER ELEKTRONISCHEN ANZEIGEVORRICHTUNG IN EINEN SICHEREN ZUSTAND UND STEUERVORRICHTUNG ZUM STEUERN EINER ELEKTRONISCHEN ANZEIGEVORRICHTUNG**
METHOD AND DEVICE FOR TRANSFERRING AN ELECTRONIC DISPLAY DEVICE INTO A SECURED STATE, AND CONTROLLER FOR CONTROLLING AN ELECTRONIC DISPLAY DEVICE
PROCÉDÉ ET DISPOSITIF PERMETTANT DE FAIRE PASSER UN DISPOSITIF D'AFFICHAGE ÉLECTRONIQUE DANS UN ÉTAT SÛR ET DISPOSITIF DE COMMANDE D'UN DISPOSITIF D'AFFICHAGE ÉLECTRONIQUE

(30) Priorität: 17.12.2013 DE 102013226167
(43) Veröffentlichungstag der Anmeldung: 26.10.2016
(73) Patentinhaber: Lemförder-Electronic GmbH, 32339 Espelkamp (DE)
(72) Erfinder: JAHN, Jorg, 32257 Bünde (DE)
(74) Vertreter: Riegel, Werner
(86) Internationale Anmeldenummer: PCT/EP2014/074726
(87) Internationale Veröffentlichungsnummer: WO 2015/090779

(56) Entgegenhaltungen:
- EP-A1- 1 502 802
- DE-A1-102008 023 231
- US-A- 4 991 096

## Beschreibung

Die vorliegende Erfindung bezieht sich auf ein Verfahren und eine Vorrichtung zum Versetzen einer elektronischen Anzeigevorrichtung für ein Fahrzeug in einen sicheren Zustand sowie auf eine Steuervorrichtung zum Steuern der elektronischen Anzeigevorrichtung, wobei die Anzeigevorrichtung ausgebildet ist, um eine Bildinformation ohne Anliegen einer Betriebsspannung aufrechtzuerhalten.

Die EP 1 502 802 A1 offenbart einen Schaltknauf eines Schalthebels in einem Kraftfahrzeug, wobei im Kopfbereich des Schaltknaufs ein in Betriebseinbaulage für den Fahrer des Kraftfahrzeugs sichtbarer optischer Informationsträger vorgesehen ist.

Vor diesem Hintergrund schafft die vorliegende Erfindung ein verbessertes Verfahren und eine verbesserte Vorrichtung zum Versetzen einer elektronischen Anzeigevorrichtung für ein Fahrzeug in einen sicheren Zustand sowie eine verbesserte Steuervorrichtung zum Steuern einer elektronischen Anzeigevorrichtung gemäß den Hauptansprüchen. Vorteilhafte Ausgestaltungen ergeben sich aus den Unteransprüchen und der nachfolgenden Beschreibung.

Eine Anzeigevorrichtung, bei der nur zum Ändern einer angezeigten Bildinformation Energie erforderlich ist, zum kontinuierlichen Anzeigen der Bildinformation jedoch keine Energie erforderlich ist, eignet sich beispielsweise zur Anwendung im Fahrzeugbereich. Eine solche Anzeigevorrichtung ist unter dem Begriff elektronisches Papier bekannt. Beispielsweise kann eine solche Anzeige auf dem Prinzip der Elektrophorese basieren. Die Bildinformation kann dabei durch farbige Partikel dargestellt werden, die durch Anlegen eines elektrischen Feldes in eine Position gebracht werden, in der sie für einen Betrachter sichtbar bzw. nicht sichtbar sind. Bei Verwendung einer solchen Anzeigevorrichtung, die auch als statisches Display bezeichnet wird, wird das zur Darstellung einer Bildinformation verwendete Licht nicht emittiert, sondern reflektiert. Dadurch wird nur immer dann Strom zum Betreiben der Anzeigevorrichtung benötigt, wenn der Inhalt der Anzeige geändert werden soll. Eine Anzeigefläche der Anzeigevorrichtung lässt sich in gewissen Grenzen wölben und die Ablesbarkeit ist aus einem großen Blickwinkelbereich möglich.

Die Anzeigevorrichtung kann im Fahrzeugbereich beispielsweise bei Automatikwahlhebeln oder Tastenschaltungen anstelle von oder in Kombination mit Licht emittierende Displays oder LEDs eingesetzt werden, die permanent elektrisch angesteuert werden müssen, damit die Ganginformation oder andere Informationen, z. B. ein Logo, die Uhrzeit, Fehlermeldungen oder ein Fahrmodus, auf dem Knauf oder an anderen Stellen eines Bedienelements angezeigt werden. Somit besteht eine beispielhafte Verwendung der Anzeigevorrichtung in einem Schaltknauf eines Fahrzeugs, der eine solche Anzeigevorrichtung an einer für den Fahrer des Fahrzeugs sichtbaren Position aufweist. Vorteilhafterweise ist zum Betreiben der Anzeigevorrichtung keine permanente elektrische Ansteuerung erforderlich.

Im Gegensatz zu Licht emittierenden Anzeigeelementen, z. B. basierend auf Displays oder/und LEDs, ist die Anzeigevorrichtung auch bei starker Sonneneinstrahlung einfach abzulesen. Daher kann auf die Erzeugung hoher Helligkeiten verzichtet werden, die bei herkömmlichen Displays eine enorme Verlustleistung in Form von Wärme abgegeben, wodurch sich der Stromverbrauch unerwünscht erhöht und sich eine spürbare Erwärmung des Bedienelements ergibt. Durch den lediglich zum Wechseln einer angezeigten Bildinformation erforderlichen geringen Energiebedarf der Anzeigevorrichtung können durch Abwärme hervorgerufene Irritationen des Nutzers beim Anfassen des Gangwahlhebels vermieden werden. Aufgrund der vernachlässigbaren Eigenerwärmung sind keine höheren Anforderungen an die elektronischen Bauteile zu stellen und die Ausfallwahrscheinlichkeit ist gering. Ferner gibt es im Unterschied zu herkömmlichen Displays keine Einschränkungen im Blick- bzw. Betrachtungswinkel. Ein weiterer Vorteil ist, dass die Anzeigevorrichtung auch für gewölbte Oberflächen geeignet ist, sich also wölben lässt.

Damit eine von der Anzeigevorrichtung dargestellte Bildinformation beispielsweise nach Ausfall einer Steuereinrichtung zum Ansteuern der Anzeigevorrichtung nicht dauerhaft bestehen bleibt, kann die von der Anzeigevorrichtung dargestellte Bildinformation beispielsweise dann überschrieben oder gelöscht werden, wenn sich die Steuereinrichtung in einem unsicheren Betriebsmodus befindet, beispielsweise wenn ein Neustart der Steuereinrichtung erforderlich ist oder durchgeführt wird oder die Steuereinrichtung ausgeschaltet wird. Durch Auswechseln einer aktuell von der Anzeigevorrichtung angezeigten Bildinformation durch eine sichere Bildinformation, die beispielsweise für einen Betrachter der Anzeigevorrichtung als eine einfarbige Anzeige erscheint, kann die Anzeigevorrichtung in einen sicheren Zustand versetzt werden.

Ein Verfahren zum Versetzen einer elektronischen Anzeigevorrichtung für ein Fahrzeug in einen sicheren Zustand, wobei die elektronische Anzeigevorrichtung ausgebildet ist, um ansprechend auf ein von einer Steuereinrichtung empfangenes Bildsignal eine von dem Bildsignal übertragene Bildinformation anzuzeigen und ohne Anliegen einer Betriebsspannung aufrechtzuerhalten, umfasst die folgenden Schritte:
Empfangen eines Diagnosesignals über eine Schnittstelle zu der Steuereinrichtung, wobei das Diagnosesignal ein von der Steuereinrichtung bereitgestelltes Signal repräsentiert; und
Ausgeben eines Rücksetzsignals an eine Schnittstelle zu der Anzeigevorrichtung abhängig von einem Signalzustand des Diagnosesignals, wobei das Rücksetzsignal ausgebildet ist, um eine Anzeige einer sicheren Bildinformation durch die Anzeigevorrichtung zu bewirken, um die Anzeigevorrichtung in den sicheren Zustand zu versetzen.

Das Bildsignal und das Rücksetzsignal können elektrische Signale darstellen, die beispielsweise über Ausgangstreiber elektrischer Schaltungen ausgegeben und über elektrische Leitungen, beispielsweise Leiterbahnen einer Leiterplatte, übertragen werden. Das Bildsignal und das Rücksetzsignal können über zwei separate Übertragungswege an die Anzeigevorrichtung bereitgestellt werden. Die Anzeigevorrichtung kann ausgebildet sein, um ansprechend auf einen Empfang des Bildsignals oder des Rücksetzsignals Bildpunkte einer Anzeigefläche der Anzeigevorrichtung so einzustellen, dass die von dem jeweiligen Signal übertragene Bildinformation grafisch dargestellt wird. Über das Bildsignal können unterschiedliche Bildinformationen an die Anzeigevorrichtung übertragen werden. Eine Bildinformation kann beispielsweise ein Symbol, ein Piktogramm, ein oder mehrere Schriftzeichen oder auch eine einfarbige Fläche darstellen. Die sichere Bildinformation kann beispielsweise eine durchgängig einfarbige Fläche darstellen.

Gemäß einer Ausführungsform kann im Schritt des Ausgebens das Rücksetzsignal ausgegeben werden, wenn das Diagnosesignal einen inaktiven Signalzustand aufweist. Entsprechend kann im Schritt des Ausgebens das Rücksetzsignal nicht ausgegeben werden, wenn das Diagnosesignal einen aktiven Signalzustand aufweist. Ein aktiver Signalzustand kann durch ein aktives Treiben eines Signalpegels des Diagnosesignals, insbesondere durch Halten des Signalpegels auf einer sich von Masse unterscheidenden Signalspannung, gekennzeichnet sein. Beispielsweise kann der aktive Signalzustand durch einen Spannungswert gekennzeichnet sein, der betragsmäßig eine vorbestimmte Spannungsschwelle überschreitet. Der inaktive Signalzustand kann entsprechend durch einen Spannungswert gekennzeichnet sein, der betragsmäßig die vorbestimmte Spannungsschwelle unterschreitet. Der aktive Signalzustand kann beispielsweise als High-Pegel und der inaktive Signalzustand als Low-Pegel des Diagnosesignals bezeichnet werden. Der Low-Pegel kann Masse sein. Vorteilhafterweise kann auf diese Weise das Rücksetzsignal gerade auch dann ausgegeben werden, wenn die Steuereinrichtung nicht in der Lage ist, das Diagnosesignal aktiv zu treiben, also in dem aktiven Signalzustand zu halten.

Das Verfahren kann einen Schritt des Steuerns eines Energieflusses einer zum Ausgeben des Rücksetzsignals erforderlichen Energie unter Verwendung des Diagnosesignals umfassen. Im Schritt des Ausgebens kann das Rücksetzsignal unter Verwendung der Energie ausgegeben werden. Durch das Steuern des Energieflusses kann der Energiefluss blockiert oder freigegeben werden. Durch ein Blockieren des Energieflusses kann das Ausgeben des Rücksetzsignals zuverlässig unterbunden werden, da die zum Ausgeben des Rücksetzsignals erforderliche Energie nicht zur Verfügung steht. Das Freigeben des Energieflusses kann ein automatisches Generieren und Ausgeben des Rücksetzsignals zur Folge haben. Dadurch lässt sich die Ausgabe des Rücksetzsignals sehr einfach über das Steuern des Energieflusses steuern. Die Energie kann eine elektrische Energie darstellen. Der Energiefluss kann ein elektrischer Strom über eine elektrische Leitung sein. Somit kann das Steuern des Energieflusses einfach unter Verwendung einer Schalteinrichtung realisiert werden, die die Leitung zum Leiten des Energieflusses unterbricht oder schließt.

Dabei kann das Verfahren einen Schritt des Aufbauens einer Energiereserve zum Bereitstellen des Energieflusses umfassen. Zum Aufbauen der Energiereserve kann ein Energiespeicher geladen werden. Dabei kann auf einen bekannten Energiespeicher, beispielsweise in Form eines Kondensators oder eines Akkus, zurückgegriffen werden. Sofern ein Akku als Energiespeicher verwendet wird, ist der Akku vorzugsweise mit einer Überwachungseinrichtung gekoppelt, welche die den Akku speisende Stromstärke und/oder Spannung zum Aufladen des Akkus überwacht. Die Überwachungseinrichtung kann Teil der Steuereinrichtung sein.

Eine entsprechende Vorrichtung zum Versetzen einer elektronischen Anzeigevorrichtung für ein Fahrzeug in einen sicheren Zustand, wobei die elektronische Anzeigevorrichtung ausgebildet ist, um ansprechend auf ein von einer Steuereinrichtung empfangenes Bildsignal eine von dem Bildsignal übertragene Bildinformation anzuzeigen und ohne Anliegen einer Betriebsspannung aufrechtzuerhalten, weist die folgenden Merkmale auf:
eine Empfangseinrichtung zum Empfangen eines Diagnosesignals über eine Schnittstelle zu der Steuereinrichtung, wobei das Diagnosesignal ein von der Steuereinrichtung bereitgestelltes Signal repräsentiert; und
eine Ausgabeeinrichtung zum Ausgeben eines Rücksetzsignals an eine Schnittstelle zu der Anzeigevorrichtung abhängig von einem Signalzustand des Diagnosesignals, wobei das Rücksetzsignals ausgebildet ist, um eine Anzeige einer sicheren Bildinformation durch die Anzeigevorrichtung zu bewirken, um die Anzeigevorrichtung in den sicheren Zustand zu versetzen.

Die Einrichtungen der Vorrichtung können ausgebildet sein, um die Schritte des Verfahrens zum Versetzen einer elektronischen Anzeigevorrichtung in einen sicheren Zustand umzusetzen. Die Schnittstellen können beispielsweise als elektrische Anschlüsse realisiert sein. Die Einrichtungen können als elektrische Schaltungen ausgeführt sein.

Beispielsweise kann die Vorrichtung eine Schalteinrichtung und eine Bereitstellungseinrichtung zum Bereitstellen des Rücksetzsignals an die Ausgabeeinrichtung aufweisen. Dabei kann die Schalteinrichtung ausgebildet sein, um gesteuert durch das Diagnosesignal eine Verbindung zwischen der Bereitstellungseinrichtung und einer Schnittstelle zu einer Energiereserve zum Bereitstellen einer zum Betreiben der Bereitstellungseinrichtung erforderlichen Energie zu steuern. Die Bereitstellungseinrichtung kann beispielsweise eine integrierte Schaltung und die Ausgabeeinrichtung kann ein Ausgangstreiber der Bereitstellungseinrichtung sein. Beispielsweise kann ein erster Signalzustand des Diagnosesignals, beispielsweise ein aktiver Signalzustand, zu einem Öffnen der Schalteinrichtung und ein zweiter Signalzustand des Diagnosesignals, beispielsweise ein inaktiver Signalzustand, zu einem Schließen der Schalteinrichtung führen. Auf diese Weise kann die Schalteinrichtung ohne weitere Logik direkt durch das Diagnosesignal betätigt werden. Eine solche Schalteinrichtung kann beispielsweise kostengünstig durch eine Transistorschaltung realisiert sein. Je nach Schaltzustand der Schalteinrichtung kann die zum Betreiben der Bereitstellungseinrichtung erforderliche Energie über die Schalteinrichtung von der Energiereserve an die Bereitstellungseinrichtung bereitgestellt werden, oder aber nicht. Dadurch kann der Betrieb der Bereitstellungseinrichtung sehr einfach gesteuert werden.

Gemäß einer Ausführungsform kann die Vorrichtung die Energiereserve in Form eines Kondensators aufweisen. Vorteilhafterweise kann ein solcher Kondensator ausreichend Energie speichern, um die Ausgabe des Rücksetzsignals und ein Anzeigen der sicheren Bildinformation durch die Anzeigevorrichtung zu ermöglichen.

Die Ausgabeeinrichtung kann daher ausgebildet sein, um einen Teil der Energie der Energiereserve an eine Betriebsspannungsschnittstelle zum Bereitstellen der Betriebsspannung der Anzeigevorrichtung auszugeben. Der Teil der Energie kann dabei über die Schalteinrichtung geführt werden. Somit kann die Energie der Energiereserve nur dann zum Betreiben der Anzeigevorrichtung verwendet werden, wenn sich die Steuereinrichtung in einem unsicheren Betriebsmodus oder im ausgeschalteten Zustand befindet. Auf diese Weise kann sichergestellt werden, dass die Anzeigevorrichtung mit ausreichend Energie zur Darstellung der sicheren Bildinformation versorgt wird, auch wenn eine während des sicheren Betriebsmodus der Steuereinrichtung zur Versorgung der Anzeigevorrichtung verwendete Energiequelle ausgefallen ist.

Die genannte Vorrichtung zum Versetzen der Anzeigevorrichtung in einen sicheren Zustand kann in Verbindung mit der genannten Steuereinrichtung zum Steuern der Anzeigevorrichtung als Steuervorrichtung bezeichnet werden.

Eine solche Steuervorrichtung zum Steuern einer elektronischen Anzeigevorrichtung für ein Fahrzeug, wobei die elektronische Anzeigevorrichtung ausgebildet ist, um ansprechend auf ein von einer Steuereinrichtung empfangenes Bildsignal eine von dem Bildsignal übertragene Bildinformation anzuzeigen und ohne Anliegen einer Betriebsspannung aufrechtzuerhalten, weist die folgenden Merkmale auf:
die Steuereinrichtung mit einer ersten Ausgabeschnittstelle zum Bereitstellen des Bildsignals und einer zweiten Ausgabeschnittstelle zum Ausgeben eines Diagnosesignals, wobei die Steuereinrichtung ausgebildet ist, um einen aktiven Signalzustand des Diagnosesignals zu bewirken, wenn sich die Steuereinrichtung in einem sicheren Betriebsmodus befindet und einen inaktiven Signalzustand des Diagnosesignals zu bewirken oder zuzulassen, wenn sich die Steuereinrichtung in einem unsicheren Betriebsmodus oder einem inaktiven Modus befindet; und
eine genannte Vorrichtung zum Versetzen der elektronischen Anzeigevorrichtung in einen sicheren Zustand, wobei die Vorrichtung zum Versetzen ausgebildet ist, um das Rücksetzsignal auszugeben, wenn das Diagnosesignal den inaktiven Signalzustand aufweist und das Rücksetzsignal nicht auszugeben, wenn das Diagnosesignal den aktiven Signalzustand aufweist.

Die Steuereinrichtung kann als eine integrierte Schaltung ausgeführt sein, beispielsweise in Form eines Mikrocontrollers. Die Vorrichtung zum Versetzen der Anzeigevorrichtung in einen sicheren Zustand, oder Einrichtungen der Vorrichtung zum Versetzen der Anzeigevorrichtung in einen sicheren Zustand, können getrennt von der Steuereinrichtung realisiert und angeordnet sein, beispielsweise in separaten Gehäusen. Auf diese Weise kann vermieden werden, dass ein die Steuereinrichtung betreffender Fehler Auswirkungen auf die Vorrichtung zum Versetzen hat. Die Vorrichtung zum Versetzen der Anzeigevorrichtung in einen sicheren Zustand kann eine eigenständige Energieversorgung, beispielsweise bereitgestellt durch eine Energiereserve aufweisen, die einen Betrieb der Vorrichtung auch nach einem Ausfall einer Energieversorgung der Steuereinrichtung ermöglicht. Vorteilhafterweise kann die Vorrichtung unabhängig von der Steuereinrichtung betrieben werden, sodass das Rücksetzsignal auch nach einem vollständigen Ausfall der Steuereinrichtung noch von der Vorrichtung zum Versetzen der Anzeigevorrichtung in einen sicheren Zustand ausgegeben werden kann.

Gemäß einer Ausführungsform kann die Steuereinrichtung eine Eingangsschnittstelle zum Empfangen einer Information über einen eingestellten oder einzustellenden Gang eines Getriebes des Fahrzeugs aufweisen und ausgebildet sein, um das Bildsignal mit einer den Gang abbildenden Bildinformation auszugeben. Eine solche Ausführungsform bietet sich im Zusammenhang mit der Anwendung einer durch die Anzeigevorrichtung realisierten Ganganzeige an. Vorteilhafterweise kann einem Fahrer eines Fahrzeugs dabei eine aktuelle Fahrstufe eines Getriebes des Fahrzeugs angezeigt werden. Durch die Vorrichtung zum Versetzen der Anzeigevorrichtung in einen sicheren Zustand kann sichergestellt werden, dass die Anzeigevorrichtung beispielsweise bei Ausfall der Steuereinrichtung nicht dauerhaft eine Fahrstufe anzeigt, die unter Umständen aufgrund eines durchgeführten Gangwechsels nicht mehr mit einer aktuellen Fahrstufe übereinstimmt.

Alternativ oder zusätzlich kann die Steuereinrichtung eine Eingangsschnittstelle zum Empfangen einer Information über einen einzustellenden Gang eines Getriebes des Fahrzeuges aufweisen und ausgebildet sein, das Bildsignal mit einer eine Richtungsanzeige zum Erreichen des einzustellenden Ganges abbildenden Bildinformation auszugeben. Bei der Richtungsanzeige kann es sich beispielsweise um zwei einzeln anzeigbare, in entgegengesetzte Richtung zeigende Richtungspfeile handeln, wobei beispielsweise ein nach oben weisender Pfeil zum Hochschalten und ein nach unten zeigender Pfeil zum Runterschalten zum Erreichen des einzustellenden Ganges zur Anzeige bringbar ist.

Weiterhin alternativ oder zusätzlich kann die Steuereinrichtung eine Eingangsschnittstelle zum Empfangen einer Information über einen Fehler in der Steuervorrichtung aufweisen und ausgebildet sein, das Bildsignal mit einer den Fehler abbildenden Bildinformation auszugeben. Damit kann ein möglicher Fehler der Steuervorrichtung auf einfache Weise zur Anzeige gebracht und somit auslesbar sein.

Die Eingangsschnittstelle kann eingerichtet sein, eine Information oder wenigstens zwei unterschiedliche Informationen zu empfangen. Damit kann bei Ausgestaltung der Steuereinrichtung zum Empfangen von unterschiedlichen Informationen bedarfsgerecht für jede zu empfangende Information eine Eingangsschnittstelle oder für unterschiedliche Informationen eine gemeinsame Eingangsschnittstelle vorgesehen sein.

Unter einer Vorrichtung kann ein elektrisches Gerät verstanden werden, das elektrische Signale verarbeitet und in Abhängigkeit davon Steuersignale ausgibt. Die Vorrichtung kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird anhand der beigefügten Zeichnungen beispielhaft näher erläutert. Es zeigen:
- Fig. 1: ein Fahrzeug mit einer Anzeigevorrichtung gemäß einem Ausführungsbeispiel der vorliegenden Erfindung;
- Fig. 2 bis 4: unterschiedliche Betriebszustände einer Anzeigeeinheit gemäß einem Ausführungsbeispiel der vorliegenden Erfindung; und
- Fig. 5: ein Ablaufdiagramm eines Verfahrens zum Versetzen einer elektronischen Anzeigevorrichtung für ein Fahrzeug in einen sicheren Zustand.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

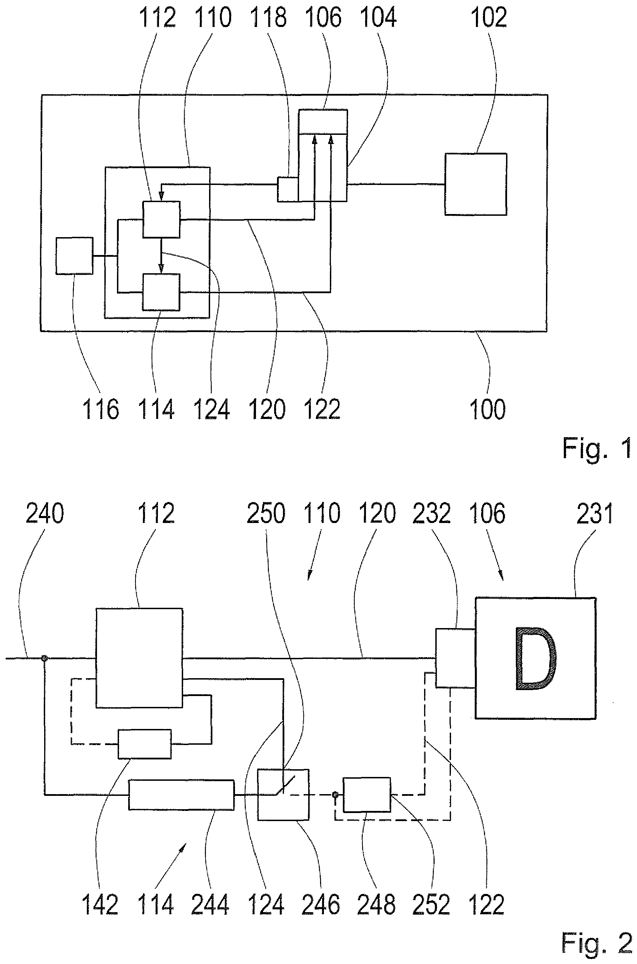

Fig. 1 zeigt ein Fahrzeug 100 mit einem Getriebe 102, einem Schalthebel 104 zum Bedienen des Getriebes 102 und einer elektronischen Anzeigevorrichtung 106 gemäß einem Ausführungsbeispiel der vorliegenden Erfindung. Beispielhaft ist die Anzeigevorrichtung 106 an dem Schalthebel 104 angeordnet. Die Anzeigevorrichtung 106 wird im verbauten Zustand verwendet, um einem Fahrer des Fahrzeugs 100 beispielsweise einen über den Schalthebel 104 ausgewählten Gang des Getriebes 102 anzuzeigen.

Die Anzeigevorrichtung 106 ist ausgebildet, um ansprechend auf den Empfang eines Bildsignals eine Bildinformation, beispielsweise einen Buchstaben oder ein Symbol, anzuzeigen. Die Anzeigevorrichtung 106 basiert beispielsweise auf dem Prinzip des elektronischen Papiers und benötigt zum Aufbauen der Bildinformation elektrische Energie, zum Aufrechterhalten der einmal aufgebauten Bildinformation jedoch keine elektrische Energie mehr.

Zum Ansteuern der Anzeigevorrichtung 106 ist eine Steuervorrichtung 110 vorgesehen. Die Steuervorrichtung 110 umfasst eine Steuereinrichtung 112 und eine Vorrichtung 114 zum Versetzen der Anzeigevorrichtung 106 in einen sicheren Zustand. Die Steuervorrichtung 110 wird gemäß diesem Ausführungsbeispiel, beispielsweise über eine Zündung des Fahrzeugs 100, von einer Batterie 116 des Fahrzeugs 100 mit elektrischer Energie versorgt. Die Anzeigevorrichtung 106, die Steuervorrichtung 110 und die Vorrichtung 114 können zusammen als Anzeigeeinheit bezeichnet werden.

Die Steuereinrichtung 112 ist ausgebildet, um zum Wechsel einer durch die Anzeigevorrichtung 106 angezeigten Bildinformation ein Bildsignal 120 an die Anzeigevorrichtung 106 oder eine Steuerlogik der Anzeigevorrichtung 106 bereitzustellen. Beispielsweise kann die Steuereinrichtung 112 ausgebildet sein, um von einem mit dem Schalthebel 104 gekoppelten Sensor 118 ein eine Betätigung des Schalthebels 104 anzeigendes Betätigungssignal zu empfangen. Ansprechend auf einen Empfang des Betätigungssignals kann die Steuereinrichtung 112 ausgebildet sein, um eine der Betätigung zugeordnete Bildinformation auszuwählen und ein die Bildinformation umfassendes Bildsignal 120 an die Anzeigevorrichtung 106 auszugeben. Ferner kann die Steuereinrichtung 112 ausgebildet sein, um die Anzeigevorrichtung 106 mit der zum Wechsel der Bildinformation erforderlichen elektrischen Energie zu versorgen. Des Weiteren oder alternativ kann die Steuereinrichtung 112 mit dem Getriebe 102 gekoppelt und ausgebildet sein, ein von dem Getriebe 102 eingelegten Gang anzeigendes Gangwahlsignal zu empfangen. Ansprechend auf einen Empfang des Gangwahlsignals kann die Steuereinrichtung 112 ausgebildet sein, um eine dem eingelegten Gang zugeordnete Bildinformation auszuwählen und ein die Bildinformation umfassendes Bildsignal 120 an die Anzeigevorrichtung 106 auszugeben. Ferner kann die Steuereinrichtung 112 ausgebildet sein, einen Vergleich der Information über die Betätigung des Schalthebels 104 mit der Information über den in dem Getriebe 102 eingelegten Gang durchzuführen und auszuwählen, welche dieser Informationen über ein entsprechendes die Information als Bildinformation umfassendes Bildsignal 120 an die Anzeigevorrichtung 106 ausgegeben werden soll, um anschließend das die Bildinformation tragende Bildsignal 120 an die Anzeigevorrichtung 106 auszugeben. Beispielsweise kann die Steuereinrichtung 112 ausgebildet sein, eine dem eingelegten Gang zugeordnete Bildinformation als Bildsignal 120 auszuwählen und an die Anzeigevorrichtung 106 auszugeben, wenn die Information über den eingelegten Gang zu der Information über eine der Betätigung des Schalthebels zugeordnete Gangwahl unterschiedlich ist. In diesem Zusammenhang kann die Steuereinrichtung 112 ferner ausgebildet sein, eine den Unterschied anzeigenden Fehler zugeordnete Bildinformation auszuwählen und als Bildsignal an die Anzeigevorrichtung 106 auszugeben.

Sofern sich die Steuereinrichtung 112 in einem sicheren Betriebsmodus befindet, indem davon ausgegangen werden kann, dass die Steuereinrichtung 112 fehlerfrei arbeitet, kann die von der Anzeigevorrichtung 106 angezeigte Bildinformation stets mit einer Betätigung oder Stellung des Schalthebels 104 bzw. mit einem ausgewählten Gang des Getriebes 102 oder einer aktuellen Fahrstufe des Fahrzeugs 100 korrespondieren.

Wenn sich die Steuereinrichtung 112 dagegen in einem unsicheren Betriebsmodus befindet, beispielsweise aufgrund eines innerhalb der Steuereinrichtung 112 aufgetretenen und erkannten Fehlers, oder sich in einem deaktivierten Zustand befindet, beispielsweise aufgrund einer unterbrochenen Energieversorgungsleitung, kann gegebenenfalls nicht gewährleistet werden, dass die von der Anzeigevorrichtung 106 angezeigte Bildinformation noch aktuell ist, also beispielsweise mit einem Betätigungszustand des Schalthebels 104 übereinstimmt. Um in einem solchen Fall eine unerwünschte oder fehlerhafte Anzeige der Anzeigevorrichtung 106 zu vermeiden, ist die Vorrichtung 114 ausgebildet, um die Anzeigevorrichtung 106 in einen sicheren Zustand zu versetzen. In dem sicheren Zustand zeigt die Anzeigevorrichtung 106 eine sichere Bildinformation, beispielsweise in Form einer einfarbigen Fläche oder eines Warnhinweises an. Zum Versetzen der Anzeigevorrichtung 106 in den sicheren Zustand ist die Vorrichtung 114 ausgebildet, um ein die Anzeige der sicheren Bildinformation bewirkendes Rücksetzsignal 122 an die Anzeigevorrichtung 106 auszugeben. Die Vorrichtung 114 ist ausgebildet, um das Rücksetzsignal 122 abhängig von einem Signalzustand eines von der Steuereinrichtung 112 bereitgestellten Diagnosesignals 124 auszugeben.

Die Steuereinrichtung 112 ist ausgebildet, um das Diagnosesignal 124 mit einem aktiven Signalzustand bereitzustellen, wenn sich die Steuereinrichtung 112 in dem sicheren Betriebsmodus befindet. Wenn sich die Steuereinrichtung 112 dagegen in einem ausgeschalteten Zustand oder in einem unsicheren Betriebsmodus befindet, ist die Steuereinrichtung 112 ausgebildet, um das Diagnosesignal 124 mit einem inaktiven Signalzustand bereitzustellen, also beispielsweise das Diagnosesignal 124 nicht aktiv zu treiben. Entsprechend ist die Vorrichtung 114 ausgebildet, um das Rücksetzsignal 122 an die Anzeigevorrichtung 106 ausgegeben, wenn das Diagnosesignal 124 einen inaktiven Signalzustand aufweist, und das Rücksetzsignal 122 nicht auszugeben, wenn das Diagnosesignal 124 einen aktiven Signalzustand aufweist. Beispielsweise kann die Vorrichtung 114 eine Schaltvorrichtung aufweisen, deren Schaltzustand durch das Diagnosesignal 124 gesteuert wird. Abhängig von dem Schaltzustand der Schaltvorrichtung kann das Rücksetzsignal 122 ausgegeben werden oder nicht ausgegeben werden.

Zum Ausgeben des Rücksetzsignals 122 kann die Vorrichtung 114 eine Energiereserve aufweisen, die beispielsweise durch die Batterie 116 gefüllt werden kann. Eine solche Energiereserve ermöglicht es der Vorrichtung 114, das Rücksetzsignal 122 auch bei einem Ausfall der Batterie 116 bereitzustellen.

Einrichtungen der Steuereinrichtung 112 und der Vorrichtung 114 können beispielsweise auf einer gemeinsamen Leiterplatte angeordnet sein. Dabei können die Steuereinrichtung 112 und die Vorrichtung 114 oder Einrichtungen der Steuereinrichtung 112 und Einrichtungen der Vorrichtungen 114 je in separaten Gehäusen angeordnet sein. Die Steuervorrichtung 110 kann getrennt vom Schalthebel 104 oder alternativ an oder in dem Schalthebel 104 angeordnet sein.

Fig. 2 zeigt ein Blockschaltbild einer Anzeigeeinheit mit einer Anzeigevorrichtung 106 und einer Steuervorrichtung 110 zum Ansteuern der Anzeigevorrichtung 106 gemäß einem Ausführungsbeispiel der vorliegenden Erfindung. Wie bereits anhand von Fig. 1 beschrieben, umfasst die Steuervorrichtung 110 eine Steuereinrichtung 112 und eine Vorrichtung 114 zum Versetzen der Anzeigevorrichtung 106 in einen sicheren Zustand.

Gemäß diesem Ausführungsbeispiel weist die Anzeigevorrichtung 106 eine Anzeigefläche 231 zum Darstellen der Bildinformation, hier beispielsweise einen Buchstaben "D", und eine Logikeinrichtung 232, hier eine Aktiv-Matrix-Logik zum Steuern der einer grafische Darstellung der Bildinformation durch die Anzeigefläche 231 auf. Die Logikeinrichtung 232 weist Eingangsanschlüsse zum Empfangen eines von der Steuereinrichtung 112 bereitgestellten Bildsignals 120 und zum Empfangen eines von der Vorrichtung 114 bereitgestellten Rücksetzsignals 122 auf. Dazu ist die Logikeinrichtung 232 über eine Leitung zum Leiten des Bildsignals 120 mit der Steuereinrichtung 112 und über eine Leitung zum Leiten des Rücksetzsignals 122 mit der Vorrichtung 114 verbunden. Der Eingangsanschluss zum Empfangen des Bildsignals 120 kann beispielsweise als ein COM-Anschluss ausgeführt sein.

Die Steuereinrichtung 112 ist gemäß diesem Ausführungsbeispiel als ein Mikrocontroller ausgeführt. Die Steuereinrichtung 112 weist einen Eingangsanschluss zum Empfangen einer Betriebsspannung 240 von einer Zündung auf. Die Betriebsspannung 240 kann beispielsweise von einer Zündeinrichtung "KL 15" eines Fahrzeugs bereitgestellt werden. Bei vorhandener Betriebsspannung 240 kann die Steuereinrichtung 112 in Betrieb sein. Bei nicht vorhandener Betriebsspannung 240 kann die Steuereinrichtung 112 außer Betrieb sein. Gemäß dem in Fig. 2 gezeigten Ausführungsbeispiel ist die Betriebsspannung 240 vorhanden, weist also beispielsweise den Zustand "ON" auf.

Ausgangsseitig weist die Steuereinrichtung 112 einen Ausgangsanschluss zum Ausgeben des Bildsignals 120 und einen Ausgangsanschluss zum Ausgeben des Rücksetzsignals 124 auf. Dabei ist die Steuereinrichtung 112 über eine Leitung zum Leiten des Rücksetzsignals 124 mit der Vorrichtung 114 verbunden. Die Ausgangsanschlüsse können geeignete Treiber zum Ausgeben der Signale 120, 124 aufweisen. Das zuletzt von der Steuereinrichtung 112 ausgegebene Bildsignal 120 hat die Bildinformation zur Anzeige des von der Anzeigevorrichtung 106 aktuell angezeigten "D" umfasst. Das "D" erscheint für einen Betrachter als ein weißer Buchstabe auf schwarzen Hintergrund.

Die Steuereinrichtung 112 befindet sich in einem sicheren Zustand. Daher weist das Rücksetzsignal 124 einen inaktiven Zustand, beispielsweise "disabled" auf. Beispielsweise wird das Rücksetzsignal 124 dazu von der Steuereinrichtung 112 nicht aktiv getrieben.

Gemäß diesem Ausführungsbeispiel ist eine Überwachungseinrichtung 142 in Form eines Watchdog vorgesehen. Die Überwachungseinrichtung 142 ist über zwei Leitungen mit der Steuereinrichtung 112 verbunden. Gemäß diesem Ausführungsbeispiel ist die Überwachungseinrichtung 142 ausgebildet, um ein Zurücksetzen, einen sogenannten Reset, der Steuereinrichtung 112 zu steuern. Gemäß dem in Fig. 2 gezeigten Ausführungsbeispiel wird gerade kein Reset ausgeführt.

Die Überwachungseinrichtung 142 oder eine weitere Überwachungseinrichtung, die auch in die Steuereinrichtung 112 integriert sein kann, können ausgebildet sein, um einen sicheren Zustand oder einen unseren Zustand der Steuereinrichtung 112 zu erkennen und anzuzeigen, um beispielsweise das aktive Treiben des aktiven Signalzustands des Diagnosesignals zu steuern.

Die Vorrichtung 114 umfasst gemäß diesem Ausführungsbeispiel eine Energiereserve 244 in Form eines Spannungspuffers, einen Schalter 246 und eine integrierte Schaltung 248. Der Schalter 246 und die integrierte Schaltung 248 können je als diskrete Bauteile ausgeführt sein. Die Energiereserve 244 kann beispielsweise als ein Kondensator ausgeführt sein. Ein Eingang der Energiereserve 244 ist mit der Betriebsspannung 240 verbunden. Ein Ausgang der Energiereserve 244 ist mit einem Eingang 250 des Schalters 246 verbunden. Ein Ausgang des Schalters 246 ist mit einem Eingang der integrierten Schaltung 248 und einem Eingang der Logikeinrichtung 232 der Anzeigevorrichtung 106 verbunden. Ein Ausgang 252 der integrierten Schaltung 248 ist mit einem weiteren Eingang der Logikeinrichtung 232 verbunden. Der Schalter 246 weist einen Steuereingang zum Empfangen des Diagnosesignals 124 auf.

Aufgrund des aktiven Zustands des Diagnosesignals 124 weist der Schalter 246 einen geöffneten Zustand auf. Somit ist der Ausgang der Energiereserve 244 von dem Eingang der integrierten Schaltung 248 und dem Eingang der Logikeinrichtung 232 getrennt. Es fließt kein Strom über den Schalter 246. Somit ist die integrierte Schaltung 248 deaktiviert und das Rücksetzsignal 122 wird nicht an die Logikeinrichtung 232 ausgegeben.

Gemäß einem Ausführungsbeispiel wird die Betriebsspannung 240 von einer "KL15" - Zündung bereitgestellt, die Überwachungseinrichtung 142 ist als Watchdog ausgeführt und die integrierte Schaltung 248 ist als IC, insbesondere als ein integrierter Schaltkreis zur Löschung der Anzeige der Anzeigevorrichtung 246 entsprechend individueller Optionen der jeweilig verwendeten Anzeigevorrichtung 106 ausgeführt. Die Logikeinrichtung 232 ist als eine Active Matrix Logic, insbesondere als eine Adressierungslogik und Ansteuerungslogik zur individuellen Aktivierung jedes Bildpunktes oder Pixels einzeln auf der Anzeigefläche 231 ausgeführt. Die Leitung oder die Leitungen für das Bildsignal 120 ist als eine COM - Kommunikationsschnittstelle, z. B. als SPI (Serial Peripheral Interface), ausgeführt. Die Energiereserve 244 ist als ein Versorgungspuffer zur Aufrechterhaltung der Versorgungsspannung des Autarkzweiges 246, 248 nach Abschaltung der Betriebsspannung 240 ausgeführt. Beispielsweise ist die Energiereserve 244 als Autarkie-Kondensator ausgeführt. Der Schalter 246 ist als eine Transistorschaltung, z. B. bestehend aus zwei Transistoren, aufgebaut, um die Öffnerfunktion bei aktivem Diagnosesignal "enabled" und die Schließerfunktion bei inaktivem Diagnosesignal "disabled" abzubilden.

Gemäß diesem Ausführungsbeispiel ist die Zündung an, die Steuereinrichtung 112 deaktiviert mittels dem Schalter 246 die integrierte Schaltung 248 und kommuniziert mit der Anzeige 106, die daraufhin die aktuelle Fahrstufe "D" ausgibt.

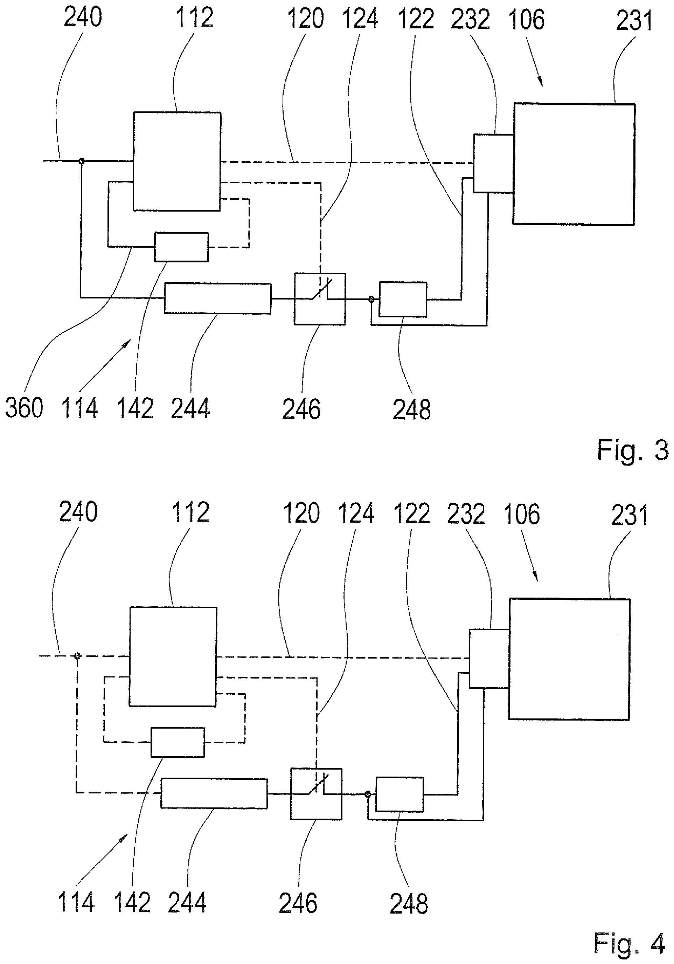

Fig. 3 zeigt ein Blockschaltbild der anhand von Fig. 2 beschriebenen Anzeigevorrichtung 106 und der anhand von Fig. 2 beschriebenen Steuervorrichtung 110 gemäß einem Ausführungsbeispiel der vorliegenden Erfindung.

Gemäß diesem Ausführungsbeispiel ist die Zündung an, ein Reset der Steuereinrichtung 112 erfolgt aufgrund eines internen Fehlers der Steuereinrichtung 112, der Schalter 246 aktiviert die integrierte Schaltung 248 und die Anzeigefläche 231 wird aktiv von der integrierten Schaltung 248 gelöscht.

Gemäß diesem Ausführungsbeispiel befindet sich die Steuereinrichtung 112 in einem unsicheren Zustand. Dabei wird gemäß diesem Ausführungsbeispiel ein Reset der Steuereinrichtung 112 durchgeführt. Dazu wird von der Überwachungseinrichtung 142 ein Reset-Signal 360 an die Steuereinrichtung 112 ausgegeben.

Die Betriebsspannung 240 ist vorhanden. Das Bildsignal 120 wird nicht ausgegeben. Das Diagnosesignal 124 weist einen inaktiven Signalzustand, beispielsweise "disabled", auf. Aufgrund des inaktiven Zustands des Diagnosesignals 124 weist der Schalter 246 einen geschlossenen Zustand auf. Somit ist der Ausgang der Energiereserve 244 über den Schalter 246 elektrisch leitend mit dem Eingang der integrierten Schaltung 248 und dem Eingang der Logikeinrichtung 232 verbunden. Es fließt ein von der Energiereserve 244 bereitgestellter Strom über den Schalter 246. Eine über den Schalter 246 bereitgestellte Spannung der Energiereserve 244 wird als Betriebsspannung der integrierten Schaltung 248 und als Betriebsspannung der Logikeinrichtung 232 verwendet. Die integrierte Schaltung 248 ist aktiviert und ausgebildet, um das Rücksetzsignal 122 an die Logikeinrichtung 232 auszugeben. Ansprechend auf den Empfang des Rücksetzsignals 122 ist die Logikeinrichtung 232 ausgebildet, um eine grafische Darstellung einer sicheren Bildinformation, hier eine einfarbig schwarze oder dunkle Fläche, durch die Anzeigefläche 231 darzustellen. Die sichere Bildinformation kann über das Rücksetzsignal 122 an die Logikeinrichtung 232 übertragen worden sein. Alternativ kann die Logikeinrichtung 232 ausgebildet sein, um ansprechend auf das Rücksetzsignal die sichere Bildinformation zu erzeugen. Unter Verwendung der von der Energiereserve 244 über den Schalter 246 bereitgestellten elektrischen Energie kann eine aktuelle grafische Darstellung einer Bildinformation, beispielsweise des in Fig. 2 gezeigten "D" durch eine grafische Darstellung der sicheren Bildinformation, hier einer schwarzen Fläche, überschrieben werden. Die grafische Darstellung der sicheren Bildinformation wird von der Anzeigevorrichtung 106 auch nach Entleerung der Energiereserve 244 gehalten.

Fig. 4 zeigt ein Blockschaltbild der anhand von Fig. 2 beschriebenen Anzeigevorrichtung 106 und der anhand von Fig. 2 beschriebenen Steuervorrichtung 110 gemäß einem Ausführungsbeispiel der vorliegenden Erfindung.

Gemäß diesem Ausführungsbeispiel ist die Zündung aus, die Steuereinrichtung 112 ist inaktiv, der Schalter 246 aktiviert die integrierte Schaltung 248 und die Anzeigefläche 231 wird aktiv von der integrierten Schaltung 248 gelöscht.

Gemäß diesem Ausführungsbeispiel befindet sich die Steuereinrichtung 112 in einem ausgeschalteten Zustand, da die Betriebsspannung 240 nicht vorhanden ist. Das Bildsignal 120 wird nicht ausgegeben. Das Diagnosesignal 124 weist einen inaktiven Signalzustand, beispielsweise "disabled", auf. Aufgrund des inaktiven Zustands des Diagnosesignals 124 weist der Schalter 246 einen geschlossenen Zustand auf. Somit ist der Ausgang der Energiereserve 244 über den Schalter 246 elektrisch leitend mit dem Eingang der integrierten Schaltung 248 und dem Eingang der Logikeinrichtung 232 verbunden. Dies führt, wie anhand von Fig. 3 beschrieben, dazu, dass eine aktuelle grafische Darstellung einer Bildinformation, beispielsweise des in Fig. 2 gezeigten "D" durch eine grafische Darstellung der sicheren Bildinformation, hier einer schwarzen Fläche, überschrieben wird. Die grafische Darstellung der sicheren Bildinformation wird von der Anzeigevorrichtung 106 auch nach Entleerung der Energiereserve 244 gehalten.

Im Folgenden werden anhand der Figuren 2 bis 4 unterschiedliche Ausführungsbeispiele der vorliegenden Erfindung näher beschrieben.

Die Anzeigevorrichtung 106 kann als eine schwarz/weiß Anzeige oder als eine Anzeige, die farbige Symbole darstellen kann, ausgeführt sein. Die Anzeigevorrichtung 106 kann als ein halbtransparentes Display ausgeführt sein, das sich hinterleuchten lässt, um nachts Anforderungen an die Sichtbeleuchtung zu realisieren. Statt einer Hinterleuchtung kann allerdings auch Auflicht, z. B. aus der Ambientebeleuchtung des Fahrzeugs oder über eine Frontausleuchtung in Form von Lichtleiterstrukturen (z.B. nano-print Technologie) auf der Anzeigeoberfläche, verwendet werden.

Weiterhin kann die Anzeige vorzugsweise zusätzlich als berührungsempfindliche Oberfläche, auch bekannt als Touch Screen, ausgeführt sein. Beispielsweise kann die berührungsempfindliche Oberfläche eine kapazitive Oberfläche sein. Damit kann die Anzeige gleichzeitig als Human-Machine-Interface genutzt werden.

Gemäß einem Ausführungsbeispiel wird von der Anzeigefläche 231 eine Ganginformation dargestellt. Die dargestellte Ganginformation wird bei einem Fahrzeug üblicherweise als sicherheitsrelevant eingestuft. Daher darf die Anzeigefläche 231 im Gangwahlhebel, wenn beispielsweise die Steuereinrichtung 112 über eine interne Sicherheitsdiagnose einen Fehler erkennt oder der Watchdog die Steuereinrichtung 112 in einen Reset zwingt, nicht nur abgeschaltet werden, um in den sicheren Zustand zu gelangen, sondern sie wird aktiv, also bestromt, deaktivert, bzw. die Ganginformation wird mit einer Bereinigungs-Funktion, z. B. alles schwarz oder alles weiß, überschrieben. Dazu wird ein Sicherheitsmechanismus eingesetzt, der auch autark funktioniert. Kann die Anzeigefläche 231, z. B. aufgrund eines Kurzschlusses auf einer Signalplatine, auf der die Steuereinrichtung 112 angeordnet ist, nicht mehr verändert werden, übernimmt ein Autarkiekondensator 244 für mindestens eine Sicherheitszeit (Fehlertoleranzzeit) die Versorgung aller notwendigen Schaltungsteile 248, 232, die für ein Rücksetzen der Anzeigefläche 231 in den sicheren Zustand notwendig sind. Der gleiche Mechanismus kann so gestaltet sein, dass generell bei Deaktivierung der Spannungsversorgung 240, beispielsweise nach Zündung aus, die Anzeige 231 komplett schwarz wird.

Der beschriebene Ansatz kann beispielsweise bei einem Fahrzeug in Form eines Personenkraftwagens, im Technologiefeld eines Antriebsstrangs, beispielsweise eines Landfahrzeugs, bei der Technologiegruppe der Schaltungssysteme, und insbesondere bei der Technologie eines Schaltelements eingesetzt werden.

Dabei ist der Ansatz nicht auf die genanten Anwendungsfälle beschränkt. Stattdessen kann der beschriebene Ansatz auf andere artverwandte Bedienelemente im Fahrzeug, z. B. Fahrmodus(dreh)schalter, oder in anderen Geräten außerhalb des Automobilbereichs übertragen werden.

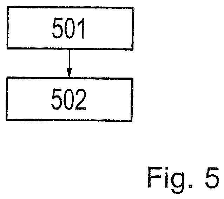

Fig. 5 zeigt ein Ablaufdiagramm eines Verfahrens zum Versetzen einer elektronischen Anzeigevorrichtung, beispielsweise für ein Fahrzeug, in einen sicheren Zustand. Dabei kann es sich um eine Anzeigevorrichtung handeln, wie sie anhand der vorangegangenen Figuren beschrieben ist. Die Schritte des Verfahrens können unter Verwendung einer Vorrichtung zum Versetzen der elektronischen Anzeigevorrichtung in einen sicheren Zustand ausgeführt werden.

In einem Schritt 501 wird ein Diagnosesignal über eine Schnittstelle zu einer Steuereinrichtung zum Steuern der Anzeigevorrichtung empfangen. In einem Schritt 502 wird ein Rücksetzsignal an eine Schnittstelle zu der Anzeigevorrichtung ausgegeben, und zwar abhängig von einem Signalzustand des Diagnosesignals. Durch den Empfang des Rücksetzsignals von der Anzeigevorrichtung wird eine aktuell von der Anzeigevorrichtung dargestellte Bildinformation durch eine sichere Bildinformation ersetzt.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 102: Getriebe
- 104: Schalthebel
- 106: Anzeigevorrichtung
- 110: Steuervorrichtung
- 112: Steuereinrichtung
- 114: Vorrichtung
- 116: Batterie
- 118: Sensor
- 120: Bildsignal
- 122: Rücksetzsignal
- 124: Diagnosesignal
- 142: Überwachungseinrichtung
- 231: Anzeigefläche
- 232: Logikeinrichtung
- 240: Betriebsspannung
- 244: Energiereserve
- 246: Schalter
- 248: integrierte Schaltung
- 250: Empfangseinrichtung
- 252: Ausgabeeinrichtung
- 360: Resetsignal
- 501: Schritt des Empfangens
- 502: Schritt des Ausgebens

## Patentansprüche

1. Verfahren zum Versetzen einer elektronischen Anzeigevorrichtung (106) für ein Fahrzeug (100) in einen sicheren Zustand, wobei die elektronische Anzeigevorrichtung (106) ausgebildet ist, um ansprechend auf ein von einer Steuereinrichtung (112) empfangenes Bildsignal (120) eine von dem Bildsignal (120) übertragene Bildinformation anzuzeigen und ohne Anliegen einer Betriebsspannung aufrechtzuerhalten, **dadurch gekennzeichnet, dass** das Verfahren die folgenden Schritte umfasst:
Empfangen (501) eines Diagnosesignals (124) über eine Schnittstelle zu der Steuereinrichtung (112), wobei das Diagnosesignal (124) ein von der Steuereinrichtung (112) bereitgestelltes Signal repräsentiert; und
Ausgeben (502) eines Rücksetzsignals (122) an eine Schnittstelle zu der Anzeigevorrichtung (106) abhängig von einem Signalzustand des Diagnosesignals (124), wobei das Rücksetzsignal (122) ausgebildet ist, um eine Anzeige einer sicheren Bildinformation durch die Anzeigevorrichtung (106) zu bewirken, um die Anzeigevorrichtung (106) in den sicheren Zustand zu versetzen.

2. Verfahren gemäß Anspruch 1, **dadurch gekennzeichnet, dass** im Schritt des Ausgebens (502) das Rücksetzsignal (122) ausgegeben wird, wenn das Diagnosesignal (124) einen inaktiven Signalzustand aufweist, und im Schritt des Ausgebens (502) das Rücksetzsignal (122) nicht ausgegeben wird, wenn das Diagnosesignal (124) einen aktiven Signalzustand aufweist.

3. Verfahren gemäß einem der vorangegangenen Ansprüche, **dadurch gekennzeichnet, dass** das Verfahren einen Schritt des Steuerns eines Energieflusses einer zum Ausgeben des Rücksetzsignals (122) erforderlichen Energie unter Verwendung des Diagnosesignals (124) umfasst und im Schritt des Ausgebens (502) das Rücksetzsignal (122) unter Verwendung der Energie ausgegeben wird.

4. Verfahren gemäß Anspruch 3, **dadurch gekennzeichnet, dass** das Verfahren einen Schritt des Aufbauens einer Energiereserve (244) zum Bereitstellen des Energieflusses umfasst.

5. Vorrichtung (114) zum Versetzen einer elektronischen Anzeigevorrichtung (106) für ein Fahrzeug (100) in einen sicheren Zustand, wobei die elektronische Anzeigevorrichtung (106) ausgebildet ist, um ansprechend auf ein von einer Steuereinrichtung (112) empfangenes Bildsignal (120) eine von dem Bildsignal (120) übertragene Bildinformation anzuzeigen und ohne Anliegen einer Betriebsspannung aufrechtzuerhalten, **dadurch gekennzeichnet, dass** die Vorrichtung (114) die folgenden Merkmale aufweist:
eine Empfangseinrichtung (250) zum Empfangen eines Diagnosesignals (124) über eine Schnittstelle zu der Steuereinrichtung (112), wobei das Diagnosesignal (124) ein von der Steuereinrichtung (112) bereitgestelltes Signal repräsentiert; und
eine Ausgabeeinrichtung (252) zum Ausgeben eines Rücksetzsignals (122) an eine Schnittstelle zu der Anzeigevorrichtung (106) abhängig von einem Signalzustand des Diagnosesignals (124), wobei das Rücksetzsignal (122) ausgebildet ist, um eine Anzeige einer sicheren Bildinformation durch die Anzeigevorrichtung (106) zu bewirken, um die Anzeigevorrichtung (106) in den sicheren Zustand zu versetzen.

6. Vorrichtung (114) gemäß Anspruch 5, **dadurch gekennzeichnet, dass** die Vorrichtung (114) eine Schalteinrichtung (246) und eine Bereitstellungseinrichtung (248) zum Bereitstellen des Rücksetzsignals an die Ausgabeeinrichtung (252) aufweist, wobei die Schalteinrichtung (246) ausgebildet ist, um gesteuert durch das Diagnosesignal (124) eine Verbindung zwischen der Bereitstellungseinrichtung (248) und einer Schnittstelle zu einer Energiereserve (244) zum Bereitstellen einer zum Betreiben der Bereitstellungseinrichtung (248) erforderlichen Energie zu steuern.

7. Vorrichtung gemäß Anspruch 5 oder 6, **dadurch gekennzeichnet, dass** die Vorrichtung (114) die Energiereserve in Form eines Kondensators oder eines Akkus aufweist.

8. Vorrichtung (114) gemäß Anspruch 6 oder 7, **dadurch gekennzeichnet, dass** die Vorrichtung (114) ausgebildet ist, um einen Teil der Energie an eine Betriebsspannungsschnittstelle zum Bereitstellen der Betriebsspannung der Anzeigevorrichtung (106) auszugeben.

9. Steuervorrichtung (110) zum Steuern einer elektronischen Anzeigevorrichtung (106) für ein Fahrzeug (100), wobei die elektronische Anzeigevorrichtung (106) ausgebildet ist, um ansprechend auf ein von einer Steuereinrichtung (112) empfangenes Bildsignal (120) eine von dem Bildsignal (120) übertragene Bildinformation anzuzeigen und ohne Anliegen einer Betriebsspannung aufrechtzuerhalten, **dadurch gekennzeichnet, dass** die Vorrichtung die folgenden Merkmale aufweist:
die Steuereinrichtung (112) mit einer ersten Ausgabeschnittstelle zum Bereitstellen des Bildsignals (120) und einer zweiten Ausgabeschnittstelle zum Ausgeben eines Diagnosesignals (124), wobei die Steuereinrichtung (112) ausgebildet ist, um einen aktiven Signalzustand des Diagnosesignals (124) zu bewirken, wenn sich die Steuereinrichtung (112) in einem sicheren Betriebsmodus befindet und einen inaktiven Signalzustand des Diagnosesignals (124) zu bewirken oder zuzulassen, wenn sich die Steuereinrichtung (112) in einem unsicheren Betriebsmodus oder einem inaktiven Modus befindet; und
eine Vorrichtung (114) gemäß einem der Ansprüche 5 bis 8 zum Versetzen der elektronischen Anzeigevorrichtung (106) in einen sicheren Zustand, wobei die Vorrichtung (114) zum Versetzen ausgebildet ist, um das Rücksetzsignal (122) auszugeben, wenn das Diagnosesignal (124) den inaktiven Signalzustand aufweist und das Rücksetzsignal (122) nicht auszugeben, wenn das Diagnosesignal (124) den aktiven Signalzustand aufweist.

10. Steuervorrichtung (110) gemäß Anspruch 9, **dadurch gekennzeichnet, dass** die Steuereinrichtung (112) eine Eingangsschnittstelle zum Empfangen einer Information über einen eingestellten oder einzustellenden Gang eines Getriebes (102) des Fahrzeugs (100) aufweist und ausgebildet ist, um das Bildsignal (120) mit einer den Gang abbildenden Bildinformation auszugeben.

11. Steuervorrichtung (110) gemäß Anspruch 9 oder 10, **dadurch gekennzeichnet, dass** die Steuereinrichtung eine Eingangsschnittstelle zum Empfangen einer Information über einen einzustellenden Gang eines Getriebes (102) des Fahrzeugs (100) aufweist und ausgebildet ist, um das Bildsignal (120) mit einer eine Richtungsanzeige zum Erreichen des einzustellenden Ganges abbildenden Bildinformation auszugeben.

12. Steuervorrichtung (110) gemäß einem der Ansprüche 9 bis 11, **dadurch gekennzeichnet, dass** die Steuereinrichtung eine Eingangsschnittstelle zum Empfangen einer Information über einen Fehler in der Steuervorrichtung aufweist und ausgebildet ist, das Bildsignal (120) mit einer den Fehler abbildenden Bildinformation auszugeben.

## Claims

1. Method for transferring an electronic display device (106) for a vehicle (100) into a secured state, wherein the electronic display device (106) is designed to display, in response to an image signal (120) received by a control device (112), image information which is transmitted by the image signal (120), and to retain said image information without the application of an operating voltage, **characterized in that** the method comprises the following steps:
receiving (501) a diagnostic signal (124) via an interface to the control device (112), wherein the diagnostic signal (124) represents a signal which is made available by the control device (112); and
outputting (502) a resetting signal (122) to an interface to the display device (106) as a function of a signal state of the diagnostic signal (124), wherein the resetting signal (122) is designed to bring about a display of secured image information via the display device (106) in order to transfer the display device (106) into the secured state.

2. Method as claimed in Claim 1, **characterized in that** in the outputting step (502) the resetting signal (122) is output if the diagnostic signal (124) has an inactive signal state, and in the outputting step (502) the resetting signal (122) is not output if the diagnostic signal (124) has an active signal state.

3. Method according to one of the preceding claims, **characterized in that** the method comprises a step of controlling an energy flow of energy which is necessary to output the resetting signal (122), using the diagnostic signal (124), and in the outputting step (502) the resetting signal (122) is output using the energy.

4. Method according to Claim 3, **characterized in that** the method comprises a step of building up an energy reserve (244) for making available the energy flow.

5. Device (114) for transferring an electronic display device (106) for a vehicle (100) into a secured state, wherein the electronic display device (106) is designed to display, in response to an image signal (120) received by a control device (112), image information which is transmitted by the image signal (120), and to retain said image information without the application of an operating voltage, **characterized in that** the device (114) has the following features:
a receiver device (250) for receiving a diagnostic signal (124) via an interface to the control device (112), wherein the diagnostic signal (124) represents a signal which is made available by the control device (112); and
an output device (252) for outputting a resetting signal (122) to an interface to the display device (106) as a function of a signal state of the diagnostic signal (124), wherein the resetting signal (122) is designed to bring about a display of secured image information by means of the display device (106), in order to transfer the display device (106) into the secured state.

6. Device (114) according to Claim 5, **characterized in that** the device (114) has a switching device (246) and a supply device (248) for supplying the resetting signal to the output device (252), wherein the switching device (246) is designed to control a connection between the supply device (248) and an interface to an energy reserve (244) under the control of the diagnostic signal (124), in order to make available energy which is necessary to operate the supply device (248).

7. Device according to Claim 5 or 6, **characterized in that** the device (114) has the energy reserve in the form of a capacitor or an accumulator.

8. Device (114) according to Claim 6 or 7, **characterized in that** the device (114) is designed to output a portion of the energy to an operating voltage interface in order to make available the operating voltage of the display device (106).

9. Control device (110) for controlling an electronic display device (106) for a vehicle (100), wherein the electronic display device (106) is designed to display, in response to an image signal (120) received by a control device (112), image information which is transmitted by the image signal (120), and to retain said image information without the application of an operating voltage, **characterized in that** the device has the following features:
the control device (112) having a first output interface for making available the image signal (120) and a second output interface for outputting a diagnostic signal (124), wherein the control device (112) is designed to bring about an active signal state of the diagnostic signal (124) if the control device (112) is in a secured operating mode and to bring about or permit an inactive signal state of the diagnostic signal (124) if the control device (112) is in an unsecured operating mode or an inactive mode; and
a device (114) according to one of Claims 5 to 8 for transferring the electronic display device (106) into a secured state, wherein the device (114) for transferring is designed to output the resetting signal (122) if the diagnostic signal (124) is in the inactive signal state, and not to output the resetting signal (122) if the diagnostic signal (124) is in the active signal state.

10. Control device (110) according to Claim 9, **characterized in that** the control device (112) has an input interface for receiving information about an engaged gear speed, or a gear speed to be engaged, of a transmission (102) of the vehicle (100) and is designed to output the image signal (120) with image information which represents the gear speed.

11. Control device (110) according to Claim 9 or 10, **characterized in that** the control device has an input interface for receiving information about a gear speed to be engaged of a transmission (102) of the vehicle (100) and is designed to output the image signal (120) with image information which represents a direction display for reaching the gear speed to be engaged.

12. Control device (110) according to one of Claims 9 to 11, **characterized in that** the control device has an input interface for receiving information about a fault in the control device and is designed to output the image signal (120) with image information which represents the fault.

## Revendications

1. Procédé pour amener un dispositif d'affichage électronique (106) pour un véhicule (100) dans un état sécurisé, le dispositif d'affichage électronique (106) étant configuré pour, en réaction à un signal d'image (120) reçu par un appareil de commande (112), afficher une information d'image transmise par le signal d'image (120) et la maintenir sans application d'une tension de service, **caractérisé en ce que** le procédé comprend les étapes suivantes :
réception (501) d'un signal de diagnostic (124) par le biais d'une interface vers l'appareil de commande (112), le signal de diagnostic (124) représentant un signal mis à disposition par l'appareil de commande (112) ; et
délivrance (502) d'un signal de réinitialisation (122) au niveau d'une interface vers le dispositif d'affichage (106) en fonction d'un état de signal du signal de diagnostic (124), le signal de réinitialisation (122) étant configuré pour provoquer un affichage d'une information d'image sécurisée par le dispositif d'affichage (106) afin d'amener le dispositif d'affichage (106) dans l'état sécurisé.

2. Procédé selon la revendication 1, **caractérisé en ce qu'**à l'étape de délivrance (502), le signal de réinitialisation (122) est délivré lorsque le signal de diagnostic (124) présente un état de signal inactif et, à l'étape de délivrance (502), le signal de réinitialisation (122) n'est pas délivré lorsque le signal de diagnostic (124) présente un état de signal actif.

3. Procédé selon l'une des revendications précédentes, **caractérisé en ce que** le procédé comprend une étape de commande d'un flux d'énergie d'une énergie nécessaire pour délivrer le signal de réinitialisation (122) en utilisant le signal de diagnostic (124) et, dans l'étape de délivrance (502), le signal de réinitialisation (122) est délivré en utilisant l'énergie.

4. Procédé selon la revendication 3, **caractérisé en ce que** le procédé comprend une étape d'établissement d'une réserve d'énergie (244) destinée à mettre à disposition le flux d'énergie.

5. Dispositif (114) pour amener un dispositif d'affichage électronique (106) pour un véhicule (100) dans un état sécurisé, le dispositif d'affichage électronique (106) étant configuré pour, en réaction à un signal d'image (120) reçu par un appareil de commande (112), afficher une information d'image transmise par le signal d'image (120) et la maintenir sans application d'une tension de service, **caractérisé en ce que** le dispositif (114) possède les caractéristiques suivantes :
un dispositif de réception (250) destiné à recevoir un signal de diagnostic (124) par le biais d'une interface vers l'appareil de commande (112), le signal de diagnostic (124) représentant un signal mis à disposition par l'appareil de commande (112) ; et
un appareil de sortie (252) destiné à délivrer un signal de réinitialisation (122) au niveau d'une interface vers le dispositif d'affichage (106) en fonction d'un état de signal du signal de diagnostic (124), le signal de réinitialisation (122) étant configuré pour provoquer un affichage d'une information d'image sécurisée par le dispositif d'affichage (106) afin d'amener le dispositif d'affichage (106) dans l'état sécurisé.

6. Dispositif (114) selon la revendication 5, **caractérisé en ce que** le dispositif (114) possède un appareil de commutation (246) et un appareil de mise à disposition (248) destiné à mettre le signal de réinitialisation à disposition de l'appareil de sortie (252), l'appareil de commutation (246) étant configuré pour, en étant commandé par le signal de diagnostic (124), commander une liaison entre l'appareil de mise à disposition (248) et une interface vers une réserve d'énergie (244) destinée à mettre à disposition une énergie nécessaire au fonctionnement de l'appareil de mise à disposition (248).

7. Dispositif selon la revendication 5 ou 6, **caractérisé en ce que** le dispositif (114) possède la réserve d'énergie sous la forme d'un condensateur ou d'un accumulateur.

8. Dispositif (114) selon la revendication 6 ou 7, **caractérisé en ce que** le dispositif (114) est configuré pour délivrer une partie de l'énergie au niveau d'une interface de tension de service en vue de mettre la tension de service à disposition du dispositif d'affichage (106).

9. Dispositif de commande (110) destiné à commander un dispositif d'affichage électronique (106) pour un véhicule (100), le dispositif d'affichage électronique (106) étant configuré pour, en réaction à un signal d'image (120) reçu par un appareil de commande (112), afficher une information d'image transmise par le signal d'image (120) et la maintenir sans application d'une tension de service, **caractérisé en ce que** le dispositif possède les caractéristiques suivantes :
l'appareil de commande (112) qui comprend une première interface de sortie destinée à mettre à disposition le signal d'image (120) et une deuxième interface de sortie destinée à délivrer un signal de diagnostic (124), l'appareil de commande (112) étant configuré pour provoquer un état de signal actif du signal de diagnostic (124) lorsque l'appareil de commande (112) se trouve dans un mode de fonctionnement sécurisé et pour provoquer ou autoriser un état de signal inactif du signal de diagnostic (124) lorsque l'appareil de commande (112) se trouve dans un mode de fonctionnement non sécurisé ou dans un mode inactif ; et
un dispositif (114) selon l'une des revendications 5 à 8 pour amener le dispositif d'affichage électronique (106) dans un état sécurisé, le dispositif (114) pour amener étant configuré pour délivrer le signal de réinitialisation (122) lorsque le signal de diagnostic (124) présente l'état de signal inactif et ne pas délivrer le signal de réinitialisation (122) lorsque le signal de diagnostic (124) présente l'état de signal actif.

10. Dispositif de commande (110) selon la revendication 9, **caractérisé en ce que** l'appareil de commande (112) possède une interface d'entrée servant à recevoir une information à propos d'un rapport engagé ou à engager d'une boîte de vitesses (102) du véhicule (100) et il est configuré pour délivrer le signal d'image (120) avec une information d'image qui représente le rapport.

11. Dispositif de commande (110) selon la revendication 9 ou 10, **caractérisé en ce que** l'appareil de commande possède une interface d'entrée servant à recevoir une information à propos d'un rapport à engager d'une boîte de vitesses (102) du véhicule (100) et il est configuré pour délivrer le signal d'image (120) avec une information d'image représentant une indication de direction pour atteindre le rapport à engager.

12. Dispositif de commande (110) selon l'une des revendications 9 à 11, **caractérisé en ce que** l'appareil de commande possède une interface d'entrée servant à recevoir une information à propos d'une erreur dans le dispositif de commande et il est configuré pour délivrer le signal d'image (120) avec une information d'image représentant l'erreur.
